# EUROPÄISCHE PATENTANMELDUNG

(11) **EP 4 614 806 A1**
(43) Veröffentlichungstag der Anmeldung: **10.09.2025**
(21) Anmeldenummer: 24161227.4
(22) Anmeldetag: 04.03.2024
(51) Int. Cl.: H02S 20/25, F24S 25/20, F24S 25/613, F24S 25/632, H02S 30/10, F24S 25/60

(54) **RAHMEN EINES PHOTOVOLTAIKMODULS**

(71) Anmelder: Zürcher Ziegeleien AG, 8105 Regensdorf (CH)
(72) Erfinder: Ebenhoch, Simon, 8047 Zürich (CD); Evertz, Jörg, 8903 Birmensdorf (CH); Hofmann, Martin, 8824 Schönenberg (CH); Klenk, Kis, 5600 Ammerswil (CH)
(74) Vertreter: Clerc, Natalia

(57) **Zusammenfassung**

Ein Rahmen eines Photovoltaikmoduls (M) zur Indachmontage auf einem Gebäudedach weist eine Verbindungsstruktur auf, die ein Aufliegen auf einer Dachlatte (L) und wahlweise eine direkte Verbindung mit einem angrenzenden Ziegel (Z) oder mit einem angrenzenden Rahmen eines weiteren Photovoltaikmoduls (M) erlaubt. Der Rahmen weist eine Sicherungsstruktur (470, 560, 23) zum Einhängen oder Einschieben einer Sturmklammer (6, 7) auf, die zwecks Sicherung des Photovoltaikmoduls (M) an der genannten oder an einer weiteren Dachlatte (L) befestigbar ist. Der Rahmen ermöglicht eine einfache und schnelle Indach-Montage von Solarmodulen (M).

## Beschreibung

### TECHNISCHES GEBIET

Die vorliegende Erfindung betrifft einen Rahmen eines Photovoltaikmoduls, ein Photovoltaikmodul, eine Photovoltaikanlage, eine Dacheindeckung, eine Kopfklammer sowie ein Verfahren zur Montage von Photovoltaikmodulen.

### STAND DER TECHNIK

Solarpanels auf Dächern von Gebäuden dienen seit einigen Jahren zur Nutzung von erneuerbarer Energie. Ein Solarpanel besteht aus mehreren Solarzellen, die Sonnenlicht in elektrische Energie umwandeln. Das Solarpanel ist in einem Rahmen gehalten. Diese Anordnung wird Photovoltaikmodul oder Solarmodul genannt.

Die Solarmodule sind entweder auf dem Dach montiert oder sie sind anstelle der herkömmlichen Dacheindeckung in die Dachfläche integriert. Die erste Montageart wird Aufdachmontage genannt, die zweite wird als Indachmontage bezeichnet.

Das Erscheinungsbild der Solarmodule bei Indachmontage ist ästhetisch ansprechender als bei der Aufdachmontage, da die Module bündig mit der restlichen Dacheindeckung, d.h. den Dachziegeln, verlaufen. Da die Solarmodule einen Teil der Dacheindeckung bilden, müssen durch sie der Schutz vor Witterungseinflüsse gewährleistet sein. Insbesondere müssen sie zuverlässig gedichtet sein. Oft müssen auch zusätzliche Dachlatten eingezogen werden, weil Solarmodule mehr Befestigungspunkte als Ziegel benötigen. Die Indachmontage ist deshalb um einiges zeitaufwändiger als die Aufdachmontage und entsprechend teurer.

DE 10 2012 110 197 A1 und WO 2011/073319 A2 beschreiben ein Solarmodule mit einem Rahmenelement und einem im Rahmelement gehaltenen Solarpanel. In DE 10 2012 110 197 A1 wird ein Aluminiumrahmen mit einem Stahlkern verstärkt. In WO 2011/073319 A2 werden längliche Steckprofile verwendet, um einen Rahmen zu bilden.

DE 10 2012 100 136 A1 beschreibt eine Vorrichtung und ein Verfahren zum Crimpen eines Rahmens eines Solarmoduls. Vier längliche Seitenprofile werden mit separaten Eckstücken miteinander verbunden und die Verbindung wird durch Crimpen fixiert.

Bei der Indachmontage werden die Solarmodule mit mehreren Haltwinkeln an die Dachlatten angeschraubt. WO 2022/146138 A1 schlägt vor, zusätzlich zur Verschraubung einen Haken zu verwenden.

Sturmklammern werden zur Lagesicherung von Dachziegeln verwendet, um ein Anheben der Ziegel bei grossem Wind zu vermeiden. Ein Beispiel einer Sturmklammer ist in EP 2 186 963 B1 beschrieben.

### DARSTELLUNG DER ERFINDUNG

Es ist eine Aufgabe der Erfindung, die Indachmontage von Photovoltaikmodulen zu vereinfachen.

Diese Aufgabe lösen ein Rahmen eines Photovoltaikmoduls -Solarpanel mit den Merkmalen des Patentanspruchs 1, eine Photovoltaikmodul mit den Merkmalen des Patentanspruchs 11, eine Photovoltaikanlage mit den Merkmalen des Patentanspruchs 12, eine Dacheindeckung mit den Merkmalen des Patentanspruchs 13, eine Kopfklammer mit den Merkmalen des Patentanspruchs 14 sowie ein Verfahren zur Montage von Photovoltaikmodulen mit den Merkmalen des Patentanspruchs 15.

Der erfindungsgemässe Rahmen eines Photovoltaikmoduls zur Indachmontage auf einem Gebäudedach weist eine Verbindungsstruktur auf, die ein Aufliegen auf einer Dachlatte und wahlweise eine direkte Verbindung mit einem angrenzenden Ziegel oder mit einem angrenzenden Rahmen eines weiteren Photovoltaikmoduls erlaubt. Der Rahmen weist eine Sicherungsstruktur zum Einhängen oder Einschieben einer Sturmklammer auf, die zwecks Sicherung des Photovoltaikmoduls an der genannten oder an einer weiteren Dachlatte befestigbar ist. Vorzugsweise ist die Sturmklammer an der Dachlatte einhängbar oder einschlagbar. Einschieben umfasst auch einstecken oder ähnliche Verbindungsarten.

Dank der Verbindungsstruktur, die eine direkte Verbindung mit der Dachlatte, den angrenzenden Ziegeln und den angrenzenden weiteren Photovoltaikmodulen erlaubt, lassen sich die Photovoltaikmodule wie Ziegel auf dem Dach verlegen. Dank der Sicherungsstruktur zum Einhängen oder Einschieben von Sturmklammern lässt sich das Photovoltaikmodul auf dieselbe Weise sichern wie Ziegel. Vorzugsweise ist die Sicherung des Photovoltaikmoduls verschraubungsfrei.

Dieser Rahmen ermöglicht eine schnelle und einfache Indachmontage von Photovoltaikmodulen. Verschraubungen erübrigen sich somit. Es sind keine Werkzeuge wie Schraubendreher notwendig. Die elektrischen Steckverbindungen lassen sich einfach erstellen. Für die Montage sind keine spezialisierten Fachleute notwendige. Die Montageanleitung genügt, damit auch weniger geschulte Fachkräfte die Montage vornehmen können.

Vorzugsweise weist die Verbindungsstruktur die Form einer Verfalzung eines Falzziegels auf. Vorzugsweise entspricht die Verbindungsstruktur der Verfalzung von Falzziegeln, die gemeinsam mit den Photovoltaikmodulen die Dacheindeckung des Dachs bilden.

Vorzugsweise ist die Sicherungsstruktur Teil der Verbindungsstruktur. Vorzugsweise entspricht diese Sicherungsstruktur der Sicherungsstruktur der ebenfalls für die Dacheindeckung verwendeten Falzziegeln, so dass mehrheitlich derselbe Typ Sturmklammern verwendet werden kann wie für die Ziegel. Auch dies erleichtert die Montage. Vorzugsweise ist die Sicherungsstruktur eine Verzahnung oder eine Aufnahmenut. Verzahnungen eignen sich insbesondere für Seitenfalzklammern. Aufnahmenuten eignen sich insbesondere für Kopfklammern.

Anstelle einer Verzahnung oder einer Aufnahmenut lassen sich auch andere Formen verwenden. Vorzugsweise ermöglicht die Sicherungsstruktur ein einfaches Einschieben oder Einhängen der Klammer. Vorzugsweise ist die Sicherungsstruktur am Rahmen angeordnet, vorzugsweise an einem Seitenprofil oder an beiden Seitenprofilen und/oder am oberen Profil des Rahmens.

Der Rahmen ist vorzugsweise aus Metall. Vorzugsweise besteht er aus Profilteilen, die miteinander verbunden sind. Die Profilteile sind vorzugsweise durch Crimpen miteinander verbunden. Dies erhöht die Stabilität und erleichtert die Fertigung. Vorzugsweise besteht mindestens ein Teil des Rahmens aus mindestens einem Druckgussteil. Vorzugsweise bestehen mindestens diejenigen Bauteile des Rahmens aus Druckgussteilen, die Strukturen zur Verbindung mit den benachbarten Ziegeln und den benachbarten Photovoltaikmodulen aufweisen. Vorzugsweise sind die seitlichen Rahmenteile des Rahmens im Druckgussverfahren hergestellt. Dank Druckgussverfahren lassen sich auf einfache und kostengünstige Weise komplexe Strukturen, insbesondere die Verbindungs- und die Sicherungsstruktur, im Rahmen ausbilden. Vorzugsweise besteht mindestens ein Teil der Rahmenteile aus Aluminium. Noch bevorzugter bestehen alle Rahmenteile aus Aluminium.

Vorzugsweise besteht der Rahmen aus genau vier Bauteilen, die jeweils einteilig ausgebildet sind. Diese sind ein oberes Rahmenteil, ein unteres Rahmenteil, ein rechtes seitliches Rahmenteil und ein linkes seitliches Rahmenteil. Die vier Bauteile sind werkseitig mit einem Solarpanel zusammengefügt bilden das Photovoltaikmodul. Dank der wenigen Bauteile ist der Zusammenbau des Photovoltaikmoduls zeitoptimiert und optimal vereinfacht. Vorzugsweise bestehen die zwei seitlichen Rahmenteile aus Aluminium und sie sind vorzugsweise im Druckgussverfahren hergestellt. Vorzugsweise sind das obere und das untere Rahmenteil ebenfalls aus Aluminium. Dies optimiert die Herstellungskosten und erleichtert das Crimpen.

Das erfindungsgemässe Photovoltaikmodul weist den erfindungsgemässen Rahmen und ein Solarpanel auf, das im Rahmen gehalten ist.

Die erfindungsgemässe Photovoltaikanlage weist mehrere erfindungsgemässe Photovoltaikmodule auf, wobei jedes Photovoltaikmodule mit mindestens zwei Sturmklammern an Dachlatten gesichert ist und wobei die Sturmklammern Seitenfalzklammern und/oder Kopfklammern sind.

Die erfindungsgemässe Dacheindeckung weist Indach-montierte Photovoltaikmodule, Falzziegel sowie einen Übergang zwischen obenliegenden Photovoltaikmodulen und unten liegenden Falzziegeln auf. Der Übergang besteht aus Muldeneinlagen, die in eine Verfalzung am oberen Ende der unten liegenden Falzziegel eingehängt sind und die derart geformt sind, dass sie Vertiefungen im oberen Bereich der nach aussen gerichteten Oberfläche der Falzziegel ausfüllen. Diese Vertiefungen werden in der Fachsprache üblicherweise als "Mulden" bezeichnet. Die Muldeineinlagen sind vorzugsweise aus Ton oder aus einem Metall, insbesondere aus Aluminium oder Kupfer gefertigt.

Vorzugsweise sind die Photovoltaikmodulen die hier beschriebenen erfindungsgemässen Photovoltaikmodule. Sie können jedoch auch einen anders geformten Rahmen aufweisen.

Die Sturmklammern können bekannte Sturmklammern sein. Vorzugsweise bestehen sie aus rostfreiem Metall, noch bevorzugter aus einem rostfreien Metalldraht. Vorzugsweise werden Sturmklammern verwendet, die in Falze der Ziegel und der Photovoltaikmodule eingreifen und die um die Dachlatte herumgeführt sind. D.h. sie müssen nicht in die Dachlatte eingeschlagen werden.

Es werden vorzugsweise zwei Typen von Sturmklammern für dieselbe Dacheindeckung verwendet: Kopfklammern und Seitenfalzklammern. Kopfklammern halten die Ziegel bzw. die Photovoltaikmodule im oberen Teil des Daches, wo die Aufhängenasen der Verbindungsstruktur der Ziegel bzw. der Photovoltaikmodule auf der Dachlatte aufliegen. Seitenfalzklammern greifen seitlich in die Sicherungsstruktur der Ziegel bzw. des Photovoltaikmoduls ein und sind an einer benachbarten Dachlatte befestigt. Vorzugsweise umgreifen die Seitenfalzklammern die benachbarte Dachlatte, sie sind somit eingehängt.

Ferner sind üblicherweise Seitenfalzeinschlagklammern vorhanden. Diese werden zur Befestigung der Ziegel oder der Solarmodule am Traufbrett verwendet. Sie weisen im oberen Bereich vorzugsweise dieselbe Form auf wie Seitenfalzklammern. Sie umgreifen das Traufbrett jedoch nicht, sondern werden in dieses eingeschlagen.

Die Erfindung umfasst eine Kopfklammer, die zur Lagesicherung einer Dacheindeckung dient. Vorzugsweise werden mit diesen Kopfklammern die erfindungsgemässen Photovoltaikmodule gesichert. Es lassen sich jedoch auch andere Typen von Photovoltaikmodulen oder lediglich Falzziegel damit sichern. Diese Kopfklammer weist ein erstes Endteil zum Umgreifen einer Dachlatte, ein Einschubteil zum Einschieben in eine Aufnahmenut einer Sicherungsstruktur der Dacheindeckung und einen zwischen dem ersten Endteil und dem Einschubteil angeordneten biegsamen Biegearm auf.

Ein einem erfindungsgemässen Verfahren zur Montage von erfindungsgemässen Photovoltaikmodulen werden die Photovoltaikmodule wie Falzziegel auf Dachlatten aufgelegt und lediglich mittels Sturmklammern gesichert.

Weitere Ausführungsformen sind in den abhängigen Ansprüchen angegeben.

### KURZE BESCHREIBUNG DER ZEICHNUNGEN

Eine bevorzugte Ausführungsform der Erfindung ist im Folgenden anhand der Zeichnungen beschrieben, die lediglich zur Erläuterung dienen und nicht einschränkend auszulegen sind. In den Zeichnungen zeigen:
- Figur 1: eine perspektivische Darstellung eines Gebäudedachs mit einer teilweise verlegten Dacheindeckung;
- Figur 2: eine Explosionsdarstellung eines erfindungsgemässen Photovoltaikmoduls, ohne Darstellung der elektrischen Verkabelung;
- Figur 3: einen Längsschnitt durch eine Dacheindeckung mit erfindungsgemässen Photovoltaikmodulen;
- Figur 4: einen Ausschnitt aus einem erfindungsgemässen Rahmen mit Darstellung des Crimpbereichs;
- Figur 5: eine perspektivische Darstellung eines linken seitlichen Rahmenteils des Rahmens gemäss Figur 4 von vorne;
- Figur 6: eine perspektivische Darstellung des linken seitlichen Rahmenteils gemäss Figur 5 von hinten;
- Figur 7: eine perspektivische Darstellung eines rechten seitlichen Rahmenteils des Rahmens gemäss Figur 4 hinten;
- Figur 8: eine perspektivische Darstellung des rechten seitlichen Rahmenteils gemäss Figur 7 von vorne;
- Figur 9: einen Querschnitt durch eine Verbindung von einem Ziegel mit einem rechts vom Ziegel angeordneten liegenden Photovoltaikmodul gemäss Figur 1;
- Figur 10: einen Querschnitt durch eine Verbindung von einem Ziegel mit einem links vom Ziegel angeordneten liegenden Photovoltaikmodul gemäss Figur 1;
- Figur 11: einen Querschnitt durch eine Verbindung von zwei nebeneinander angeordneten Photovoltaikmodulen gemäss Figur 1;
- Figur 12: ein Detail der Verbindung zwischen einem oben liegenden Photovoltaikmodul und einem Ziegel gemäss Figur 3;
- Figur 13: ein Detail der Verbindung zwischen zwei Photovoltaikmodulen gemäss Figur 3;
- Figur 14: ein Detail der Verbindung zwischen einem unten liegenden Photovoltaikmodul und einem Ziegel gemäss Figur 3;
- Figur 15: eine perspektivische Darstellung eines ersten Dichtungsprofils gemäss Figur 14;
- Figur 16: eine perspektivische Darstellung einer Seitenfalzklammer;
- Figur 17: eine perspektivische Darstellung einer erfindungsgemässen Kopfklammer;
- Figur 18: eine perspektivische Darstellung eines Teils einer Dachoberseite mit einer montierten Seitenfalzklammer;
- Figur 19: eine perspektivische Darstellung eines Teils einer Dachunterseite mit einer montierten Seitenfalzklammer;
- Figur 20: eine perspektivische Darstellung eines Teils einer Dachunterseite mit montierten Kopfklammern;
- Figur 21: eine perspektivische Darstellung eines Gebäudedachs mit einer teilweise verlegten Dacheindeckung bei Verwendung von Muldeneinlagen und
- Figur 22: zeigt ein Detail der Verbindung eines seitlichen Rahmenteils mit einem oberen Rahmenteil.

### BESCHREIBUNG BEVORZUGTER AUSFÜHRUNGSFORMEN

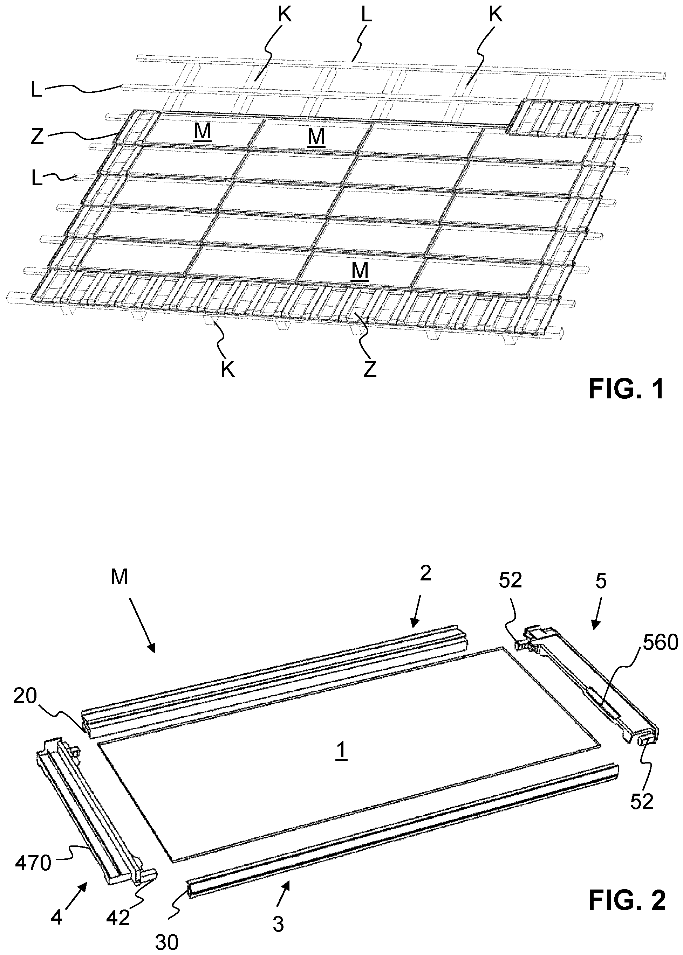

Figur 1 zeigt einen Teil eines Gebäudedachs mit Dachlatten L und Konterlatten K. Dachlatten L werden auch Ziegellatten oder Traglattung genannt. Konterlatten K werden auch Sparren genannt. Die Dachlatten L verlaufen horizontal im Dach, die Konterlatten quer dazu in Richtung der Dachneigung.

Auf den Latten L, K ist teileweise eine Dacheindeckung angeordnet. Sie besteht aus Ziegeln Z, Muldeneinlagen MZ und Photovoltaikmodulen M. Die Photovoltaikmodule M sind im Folgenden als Solarmodule M bezeichnet.

Die Solarmodule M sind Indach montiert. D.h. sie fluchten mit den Ziegeln Z. Die Ziegel Z sind vorzugsweise Falzziegel weisen eine Verfalzung mit Nuten und Rippen. Die Verfalzung findet sich vorzugsweise mindestens auf der Kopfseite (d.h. der oberen Seite) des Ziegels und an mindestens einer Seite. In Figur 1 ist die obere Verfalzung mit dem Bezugszeichen 90 bezeichnet, die seitliche Verfalzung mit dem Bezugszeichen 91. Die dargestellte Verfalzung ist lediglich beispielhaft. Sie kann je nach Ziegel auch anders geformt sein.

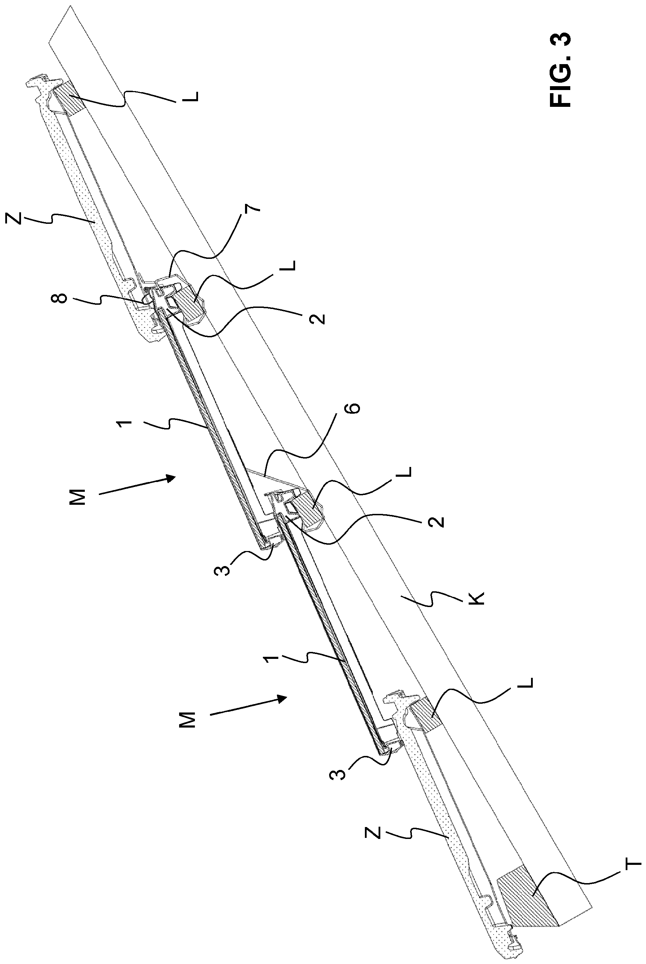

Die Verfalzung dient der Verbindung von benachbarten Ziegeln Z. Zudem lassen sich die Ziegel Z auf ihrer Kopfseite in eine Dachlatte L einhängen. Dies ist beispielsweise in Figur 3 erkennbar.

Falzziegel ermöglichen aufgrund ihrer Formgebung eine Überlappung der Ziegel nur an ihrem äusserten Rand. Falzziegel ermöglichten eine dichtere Abdeckung des Dachs als unverfalzte Ziegel.

Die Solarmodule M weisen eine Abmessung auf, die vorzugsweise mindestens in einer Richtung ein ganzzahliges Mehrfaches der Abmessungen eines Ziegels Z ist. In diesem Beispiel erstreckt sich ein Solarmodul M in seiner Länge über vier Ziegel Z und in seiner Höhe über einen Ziegel Z. Die Solarmodule M bilden gemeinsam eine Photovoltaikanlage. Vorzugsweise weisen alle Solarmodule M einer Photovoltaikanlage dieselben Abmessungen auf. Je nach Ausbildung des Daches werden jedoch auch Solarmodule M mit voneinander unterschiedlichen Abmessungen zu einer gemeinsamen Photovoltaikanlage kombiniert.

Jedes Solarmodul M weist ein Solarpanel 1 mit Solarzellen und nicht dargestellten Elektronikelementen und nicht dargestellten Kabelanschlüssen auf. Das Solarpanel 1 ein Bauteil bekannter Art. Es kann gemäss dem Stand der Technik unterschiedlich ausgebildet sein. Seine Grundform ist üblicherweise eine rechteckige Platte.

Jedes Solarmodul M weist einen Rahmen auf, der das Solarpanel 1 umgibt und das Solarpanel 1 trägt. Der Rahmen ist besteht vorzugsweise aus genau vier Rahmenteilen, nämlich einem oberen Rahmenteil 2, einem unteren Rahmenteil 3, einem linken seitlichen Rahmenteil 4 und einem rechten seitlichen Rahmenteil 5.

Die Begriffe oben, unten, links, rechts und horizontal ergeben sich aus der Einbaurichtung des Solarmoduls M im Dach, sofern sie sich auf das Solarmodul als Ganzes beziehen. Wird Bezug auf einzelne Rahmenteile oder Ziegel genommen, so ergeben sich die Begriffe oben, unten, links, rechts, horizontal und vertikal durch Bezug auf die Fläche des Solarpanels 1 bzw. des Ziegels, d.h. horizontal ist parallel zur Fläche, vertikal ist senkrecht dazu, oben ist die der Witterung bzw. dem Lichteinfall ausgesetzte Fläche.

In Figur 3 ist ein Längsschnitt durch einen Teil der Dacheindeckung dargestellt. Die Solarmodule M überlappen die Ziegel Z und die benachbarten Solarmodule M um dieselben Masse wie sich benachbarte Ziegel Z überlappen. Abgesehen von der Oberflächengestaltung der einzelnen Solarpanels 1 weist die Dacheindeckung ein einheitliches Erscheinungsbild auf, wie durch die Zusammenschau der Figuren 1 und 3 erkennbar ist. Die Kopfseiten, d.h. die oberen Bereiche der Solarmodule M und der Ziegel Z sind in die Dachlatten L eingehängt. Der unterste Ziegel Z liegt auf dem Traufbrett T auf. Das Traufbrett T, auch Stirnbrett genannt, ist die im Dach unterste Dachlatte. Anstelle eines Ziegels Z kann auch ein Solarmodul M das unterste Bauteil bilden. Dies unterste Reihe an Ziegeln Z bzw. an Solarmodulen M wird mittels Seitenfalzeinschlagklammern am Traufbrett gesichert. Diese Seitenfalzeinschlagklammern sind hier nicht dargestellt. Sie sind jedoch im Stand der Technik bekannt.

Die Ziegel Z und die Solarmodule sind Sturmklammern 6, 7 gesichert. Dabei ist das über einem zweiten Solarmodul M angeordnete obere Solarmodul M über eine Sturmklammer in Form einer Seitenfalzklammer 6 an einer in seinem unteren Bereich angeordneten Dachlatte L gesichert. Ist der obere Nachbar eines Solarmoduls M ein Ziegel, so wird das Solarmodul M über eine Sturmklammer in Form einer Kopfklammer 7 an einer in seinem oberen Bereich angeordneten Dachlatte L gesichert. Dies ist in Figur 3 erkennbar. Die Sturmklammer sind vorzugsweise einteilig ausgebildet. Sie bestehen vorzugsweise aus rostfreiem Metall, noch bevorzugter aus einem rostfreien Metalldraht. Üblicherweise sind alle Ziegel einer Dacheindeckung mit Seitenfalzklammern gesichert. In den Zeichnungen sind nur einige Klammern beispielhaft dargestellt. Es können mehr oder weniger Klammern verwendet werden.

Vorzugsweise werden für die Ziegel Z und die Solarmodule M derselbe Typ Seitenfalzklammern 6 verwendet. D.h. die verwendeten Seitenfalzklammern 6 sind in Form, Grösse und Material identisch. Je nach Ausführungsform der Solarmodule M und der Ziegel Z sind auch die verwendeten Kopfklammern 7 identisch, wobei sie sich üblicherweise in der Form und/oder Grösse von den Seitenfalzklammern 6 unterscheiden. Die Sturmklammern werden später im Text weiter beschrieben.

Der Rahmen jedes Solarmoduls M weist vorzugsweise eine Verfalzung auf, die den Ziegeln Z entspricht. Sie ist vorzugsweise identisch mit der Verfalzung der Ziegel Z. Zumindest ist sie derart, dass sie eine Verbindung mit den benachbarten Ziegeln Z und benachbarten Solarmodulen M ermöglicht, die im Wesentlichen gleichwirkend ist wie die Verbindung zwischen zwei dieser Ziegel Z.

Die Verbindung ist vorzugsweise mindestens auf beiden Seiten identisch zu einer Verbindung zwischen zwei dieser Ziegel Z.

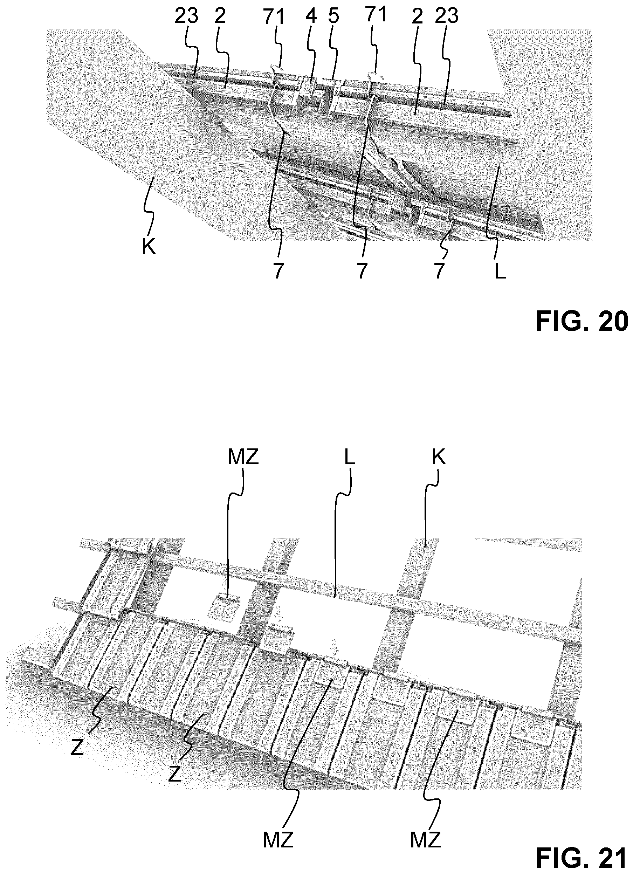

Die Verbindung zwischen einem oben liegenden Solarmodul M und einem unten angeordneten Ziegel Z kann ebenfalls identisch sein, sofern das untere Rahmenteil 3 entsprechend geformt ist. In diesem Beispiel ist sie jedoch nicht identisch. Zur Kompensation sind deshalb Muldeneinlagen MZ und vorzugsweise eine Dichtung 33 vorhanden, welche die Verbindung komplettieren,. Die MuldeneinlagenMZ und die Dichtung 33 gewährleisten eine Dichtheit gegen Schlagregen bzw. bei Regen bei starkem Wind. Diese Muldeneinlagen MZ sind in Figur 21 gezeigt. Sie werden später im Text beschrieben. Die Muldeneinlagen MZ sind in Figur 3 zwar vorhanden, aber aufgrund der Ausbildung der Oberfläche des Ziegels Z nicht sichtbar.

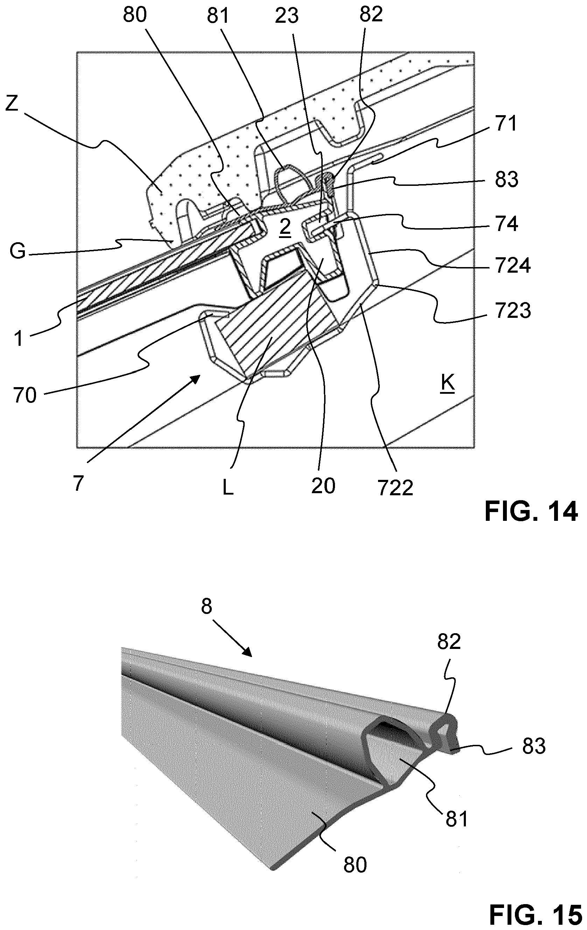

Die Verbindung zwischen einem oben liegenden Ziegel Z und unten angeordneten Solarmodul M kann ebenfalls identisch sein, sofern das obere Rahmenteil 2 entsprechend geformt ist. In diesem Beispiel ist sie jedoch nicht identisch. Zur Kompensation ist deshalb vorzugsweise ein erstes Dichtungsprofil 8 vorhanden, das sich vorzugsweise über die gesamte horizontale Länge eines Solarmoduls M, noch bevorzugter über die gesamte horizontale Länge der Photovoltaikanlage erstreckt. Das erste Dichtungsprofil 8 ist in Figur 3 erkennbar und in Figur 15 dargestellt. Es wird später im Text noch genauer beschrieben.

Je nach Form des Ziegels Z ist die zur Dachfläche ragende unterste Rippe G des Ziegels Z, die auf dem oberen Rahmen 2 des Solarmoduls M aufliegt, zudem geschrotet, d.h. gekürzt. Dies ist in Figur 14 erkennbar.

Das obere Rahmenteil 2 ist ein längliches Profilelement, das vorzugsweise einen über die gesamte Länge gleichbleibenden Querschnitt aufweist. Es weist einen Kanal 20 auf. Das untere Rahmenteil 3 ist ebenfalls ein längliches Profilelement, das vorzugsweise einen über die gesamte Länge gleichbleibenden Querschnitt aufweist. Auch dieses Profilelement weist einen Kanal 30 auf. Die Querschnittsformen der zwei Rahmenteile 2 und 3 sind üblicherweise nicht identisch. Dies ist in Figur 2 erkennbar.

Diese zwei Rahmenteile 2, 3 bestehen vorzugsweise aus Metall. Sie können jedoch auch aus Kunststoff gefertigt sein. Je nach Ausführungsform sind sie aus Aluminium oder Stahl gefertigt. Vorzugsweise sind sie aus Kostengründen im Strangpressverfahren hergestellt. Alternativ lassen sie sich beispielsweise im Druckgussverfahren herstellen.

Das linke und das rechte seitliche Rahmenteil 4 und 5 sind vorzugsweise ebenfalls längliche Profilelemente, wobei sie an ihren Enden vorzugsweise rechtwinklig vorstehende Eckstücke 42, 52 aufweisen. Vorzugsweise ist an jedem Ende ein derartiges Eckstück 42, 52 angebracht, so dass beide Rahmenteile 4, 5 je zwei Eckstücke 42, 52 aufweisen.

Diese seitlichen Rahmenteile 4, 5 sind in den Figuren 2, 5 bis 8, dargestellt und werden später im Text genauer beschrieben. Sie sind vorzugsweise aus Metall oder Kunststoff gefertigt. Vorzugsweise sind sie im Druckgussverfahren hergestellt. Dieses Herstellungsverfahren ist bei der vorliegenden komplexen Formgebung vorteilhaft.

Die vier Rahmenteile 2, 3, 4, 5 werden werkseitig um das Solarpanel 1 herum angeordnet und zusammengesetzt, so dass sie den umlaufend geschlossenen Rahmen bilden und das Solarpanel 1 tragen.

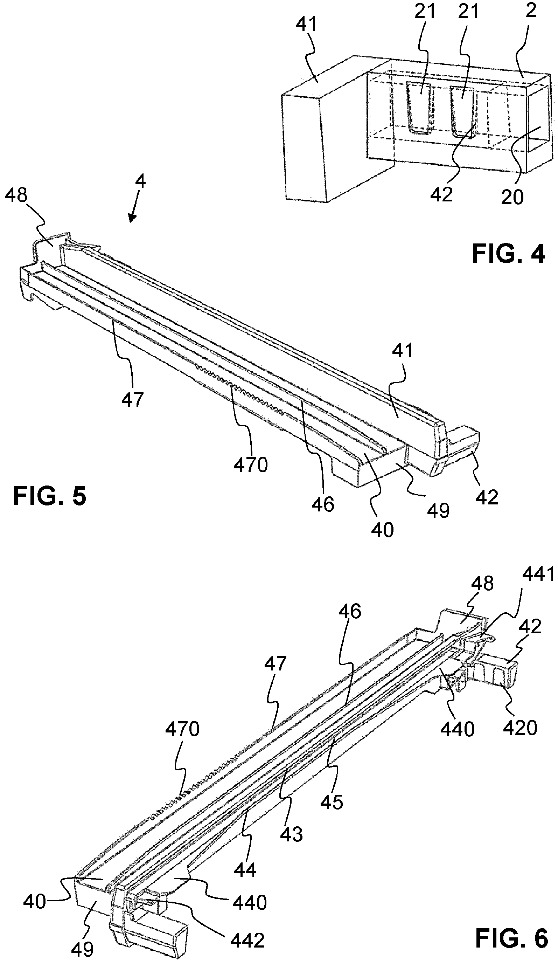

Vorzugsweise erfolgt die Verbindung mittels Crimpens, d.h. sie werden durch plastische Verformung miteinander verbunden. Figur 4 zeigt einen derartigen Verbindungsbereich zwischen einem seitlichen Rahmenteil, hier dem linken Rahmenteil 4 und einem oberen oder unteren Rahmenteil, hier dem oberen Rahmenteil 2. Die Verbindung mit dem unteren Rahmenteil 3 erfolgt auf dieselbe Weise, ebenso die Verbindung des rechten Rahmenteils 5 mit dem oberen bzw. dem unteren Rahmenteil 2, 3.

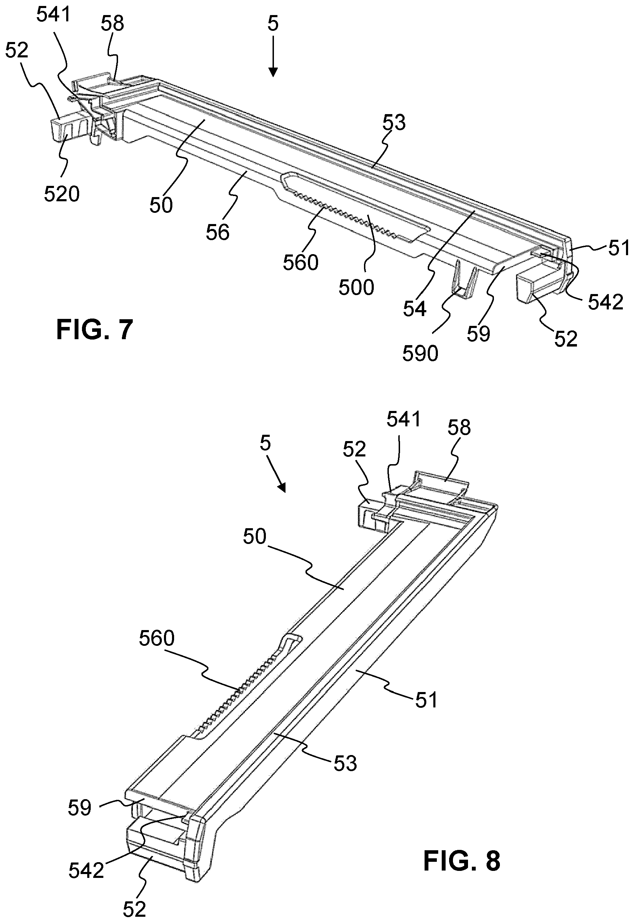

Zwecks Verbindung wird das vorstehende Eckteil 42 des linken Rahmenteils 4 in den Kanal 20 des oberen Rahmenteils 2 gesteckt. Anschliessend wird im Überlappungsbereich ein Crimpwerkzeug angesetzt und aktiviert. Dadurch entsteht mindestens eine, hier entstehen zwei Einbuchtungen 21 420, im Überlappungsbereich, die ein Herausziehen des Eckteils 42 aus dem Kanal 20 verhindern. In Figur 6 ist die Einbuchtung 420 im Eckteil 42 erkennbar, die vorzugsweise bereits vor dem Crimpen besteht. Die entsprechende Einbuchtung im rechten Rahmenteil 5 ist mit dem Bezugszeichen 520 versehen und in Figur 7 erkennbar.

Für den Zusammenbau des Solarmoduls M werden die Rahmenteile 2, 3, 4, 5 zusammengeschoben, bis sie das Solarpanel 1 haltend umgeben. Anschliessend wird gecrimpt. Alternativ werden zuerst die zwei seitlichen Rahmenteile 4, 5 mit dem oberen Rahmenteil 2 verbunden und gecrimpt. Anschliessend wird das Solarpanel 1 in die Aufnahmenuten dieser drei Bauteile 2, 4, 5 eingeschoben, das untere Rahmenteil 3 hinzugefügt und anschliessend die Crimpverbindung zwischen dem unteren Rahmenteil 3 und den seitlichen Rahmenteilen 4, 5 erstellt.

Die Dichtheit zwischen den Rahmenteilen 2, 3, 4, 5 wird durch Dichtelemente gewährleistet, vorzugsweise mittels entsprechend dem Querschnitt der Rahmenteile geformte Flächendichtungen. Die Dichtelemente sind vorzugsweise ein Elastomer, vorzugsweise EPDM.

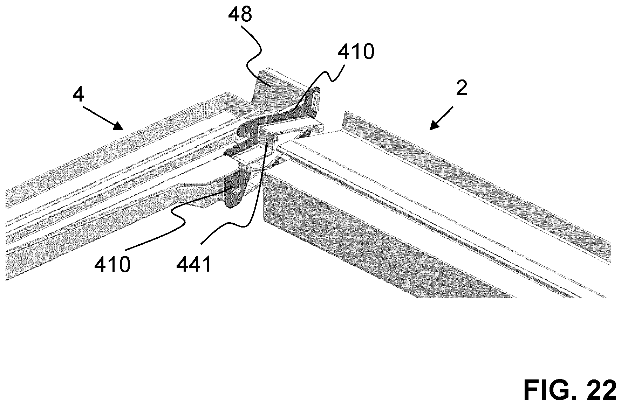

In Figur 22 ist eine Flächendichtung 410 dargestellt, die seitlich am linken Rahmenteil 4 um das Eckteil 42 angeordnet ist und die gegenüber der stirnseitigen Fläche des oberen Rahmenteils 2 dichtet. Die Flächendichtung 410 ist entsprechend dem Querschnitt des oberen Rahmenteils 2 geformt. Am rechten Rahmenteil 5 ist eine analoge Flächendichtung angebracht, die hier nicht dargestellt ist.

An den gegenüberliegenden Enden des linken und des rechten Rahmenteils 4, 5, die mit dem unteren Rahmenteil 3 verbunden werden, sind vorzugsweise ebenfalls Flächendichtungen vorhanden, die der Querschnittsform des unteren Rahmenteils 3 entsprechend und die das untere Rahmenteil 3 stirnseitig dichten. Diese Flächendichtungen sind in den Figuren ebenfalls nicht dargestellt.

Die Figuren 5 und 6 zeigen das linke seitliche Rahmenteil 4. Es ist vorzugsweise einteilig ausgebildet. Es weist einen horizontalen ersten Schenkel 40 und einen daran angeformten vertikalen zweiten Schenkel 41 auf. Der zweite Schenkel 41 ist mit seiner Rückseite dem Solarpanel 1 zugewandt, wobei das Eckstück 42 an dieser Rückseite angeformt und steht der Rückseite vorzugsweise rechtwinklig vor. Ebenfalls auf der Rückseite ist eine obere Rippe 43 und eine parallel dazu verlaufende untere Rippe 45 vorhanden, die sich in Längsrichtung des Rahmenteils 4 vorzugsweise über annähernd die gesamte Länge des Rahmenteils 4 erstrecken. Diese zwei Rippen 43, 45 bilden eine Aufnahmenut 45 zur tragenden Aufnahme einer Seitenkante des Solarpanels 1 aus.

Die untere Rippe 44 bildet an beiden Enden eine horizontal verlaufende Plattform 440 aus, die zur Auflage des Solarpanels 1 während des Montageprozesses dient, insbesondere wenn die seitlichen Rahmenteile noch nicht ganz zusammengeschoben sind.

Am ersten Schenkel 40 ist eine nach oben ragende erste Vertikalrippe 46 und eine zwei nach oben ragende Vertikalrippe 47 vorhanden. Sie verlaufen im Abstand voneinander und parallel zueinander. Sie erstrecken sich in Längsrichtung des linken Rahmenteils 4, vorzugsweise ebenfalls über annähernd die gesamte Länge des linken Rahmenteils 4. Sie bilden gemeinsam mit der Vorderseite des zweiten Schenkels 41 zwei Nuten aus. Sie bilden somit einen Teil der Verfalzung des Rahmens und somit des Solarmoduls M.

Die zweite Vertikalrippe 47 ist am linken Endbereich des zweiten Rahmenteils 4 angeordnet, vorzugsweise am äussersten, dem Solarpanel 1 abgewandten Ende. Es weist einen Bereich auf, der mit einer in Längsrichtung des linken Rahmenteils 4 verlaufenden Verzahnung 470 versehen ist. D.h. in Längsrichtung wechseln sich Erhöhungen und Vertiefungen ab. Diese Verzahnung 470 dient, wie später beschrieben ist, zum Einhängen einer Seitenfalzklammer 6.

Am oberen Ende des linken Rahmenteils 4 ist ein oberer Abschluss 48 vorhanden, der eine obere Stirnfläche ausbildet. Der Abschluss 48 schützt vor Wasser, welches andernfalls vom Wind dem Solarmodul M entlang nach oben gedrückt werden könnte.

Am unteren Ende des ersten Schenkels 40 ist ein unterer Abschluss 49 vorhanden, der eine untere, nach unten ragende Stirnfläche ausbildet. Auch der Abschluss 49 gewährleistet die Regendichtheit des Daches. Die zwei Abschlüsse 48, 49 füllen hierzu die Leerstellen zwischen den einzelnen Solarmodulen M bzw. zwischen einem Solarmodul M und den Ziegeln Z aus.

Ferner sind im Bereich der Eckteile 42 Profile angebracht, die dem Querschnitt der inneren Öffnung des oberen bzw. des unteren Rahmenteils 2, 3 entsprechen. Diese dienen beim Zusammenfügen der Rahmenteile, 2, 3, 4 als Positionierungshilfen. Die erste Positionierungshilfe zur Verbindung mit dem oberen Rahmenteil 2 ist in den Figuren mit dem Bezugszeichen 441 bezeichnet, die zweite Positionierungshilfe zur Verbindung mit dem unteren Rahmenteil 3 ist mit dem Bezugszeichen 442 bezeichnet.

In den Figuren 7 und 8 ist das rechte Rahmenteil 5 dargestellt. Es ist ebenfalls vorzugsweise einteilige ausgebildet. Es weist einen horizontalen ersten Schenkel 50 und einen angeformten vertikalen zweiten Schenkel 51 auf. Der erste Schenkel 50 ist dem Solarpanel 1 zugewandt und befindet sich auf der Vorderseite des rechten Rahmenteils 5.

Der zweite Schenkel 51 weist auf seiner dem ersten Schenkel 50 und somit dem Solarpanel 1 zugewandten Vorderseite eine obere Rippe 53 auf, die zum Solarpanel 1 gerichtet ist. Sie bildet zusammen mit der Oberfläche des ersten Schenkels 50 eine Aufnahmenut 54 zur tragenden Aufnahme einer weiteren Seitenkante des Solarpanels 1 aus.

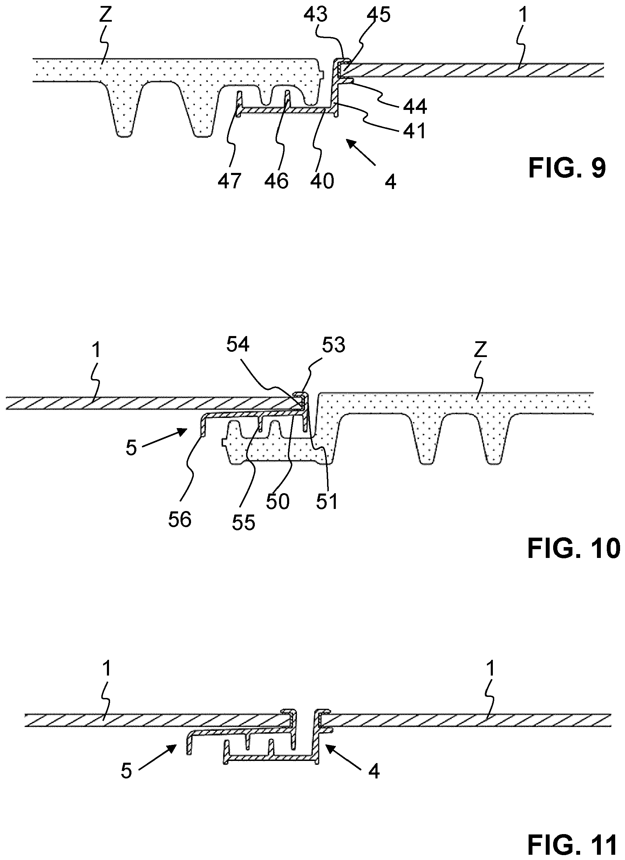

Am ersten Schenkel 50 sind eine erste unten ragende Vertikalrippe 55 und eine zweite unten ragende Vertikalrippe 56 vorhanden. Sie sind in Figur 10 gut erkennbar. In Figur 7 ist lediglich die an der vorderen Längskante des ersten Schenkels 50 angeformte zweite Vertikalrippe 56 sichtbar. Diese zweite Vertikalrippe 56 weist eine Vertiefung auf, die den Endbereich einer Vertiefung 500 im ersten Schenkel 50 ist. Die Vertikalrippen 55, 56 bilden zusammen mit dem zweiten Schenkel 51, der den ersten Schenkel 50 nach unten überragt, einen Teil der Verfalzung aus, d.h. sie bilden Rippen und dazwischen liegende Nuten aus.

Die zweite Vertikalrippe 56 weist in dieser Vertiefung eine in Längsrichtung des rechten Rahmenteils 5 erstreckende Verzahnung 560 auf, die sich in dieser Längsrichtung vorzugsweise über die Länge der Vertiefung erstreckt. Die Verzahnung 560 weist wie beim linken Rahmenteil 4 in Längsrichtung sich abwechselnde Erhöhungen und Vertiefungen auf. Sie dient ebenfalls zum Einhängen einer Seitenfalzklammer 6.

An beiden Längsenden des rechten Rahmenteils 5 sind wiederum die erwähnten Eckstücke 52 angeformt, die nun auf der Vorderseite in Richtung Solarpanel 1 mindestens dem zweiten Schenkel 51 vorstehen.

Ein oberer Abschluss 58 und ein unterer Abschluss 59 bilden Stirnseiten aus. Auch diese Abschlüsse 58, 59 gewährleisten die Regendichtigkeit, in dem sie Leerstellen zwischen den Solarmodulen M bzw. zwischen einem Solarmodul M und den Ziegeln Z der Dacheindeckung ausfüllen.

Ferner sind im Bereich der Eckteile 52 Profile angebracht, die dem Querschnitt der inneren Öffnung des oberen bzw. des unteren Rahmenteils 2, 3 entsprechen. Diese dienen beim Zusammenfügen der Rahmenteile, 2, 3, 5 als Positionierungshilfen. Die erste Positionierungshilfe zur Verbindung mit dem oberen Rahmenteil 2 ist in den Figuren mit dem Bezugszeichen 541 bezeichnet, die zweite Positionierungshilfe zur Verbindung mit dem unteren Rahmenteil 3 ist mit dem Bezugszeichen 542 bezeichnet.

Ein Stützelement 590, welches im Bereich des unteren Abschlusses in Richtung Dachfläche gerichtet ist, stützt das Solarmodul M auf dem Traufbrett ab. Dieses Stützelement 590 wird somit nur benötigt, wenn die unterste Reihe eines Dachs mit Solarmodulen M bedeckt ist.

In den Figuren 9 bis 11 ist das Zusammenwirken der Verfalzungen des linken Rahmenteils 4 und des rechten Rahmenteils 5 in der Dacheindeckung erkennbar. Die dargestellten Formen zeigen die Anwendung für eine Form eines Falzziegels. Ist der Falzziegel anders geformt, so sind auch die Rippen und Nuten, d.h. die Verfalzungen im linken und rechten Rahmenteil 4, 5 entsprechend anders ausgebildet. Die Verfalzungen bilden Verbindungsstrukturen für die in der Dacheindeckung nebeneinander liegenden Ziegel Z bzw. Solarmodule M mit ihren Solarpanels 1.

In Figur 9 ist ein Falzziegel Z mit nach unten ragenden Rippen erkennbar, die in die Nuten zwischen den Vertikalrippen 47, 46 und dem zweiten Schenkel 41 des linken Rahmenteils 4 eingreifen. In der von den Rippen 43, 45 ausgebildeten Aufnahmenut 45 ist das Solarpanel 1 gehalten.

In Figur 10 ist ein Falzziegel Z mit nach oben ragenden Rippen erkennbar, die in die Nuten zwischen den Vertikalrippen 55, 56 und dem zweiten Schenkel 51 des rechten Rahmenteils 5 eingreifen. In der von der Rippe 53 und dem ersten Schenkel 50 ausgebildeten Aufnahmenut 54 ist das Solarpanel 1 gehalten.

In Figur 11 ist die Verbindung zwischen zwei Solarpanels 1 erkennbar. Hier greifen die Vertikalrippen 55, 56 und der zweite Schenkel 51 des rechten Rahmenteils 5 in die Nuten zwischen den Rippen 47, 46 und dem zweiten Schenkel 41 des linken Rahmenteils 4 ein, und umgekehrt. Die zwei Aufnahmenuten 45, 54 tragen die jeweiligen Solarpanels 1. Die Rippen 55, 56, 47, 46 beider Rahmenteile 4, 5 sind so ausgestaltet, dass sie ein Mehrfaches eines Schiebebereichs der Ziegel Z zulassen. Vorzugsweise ermöglichen die Rippen der zwei Rahmenteile 4, 5 ein Mehrfaches an Schiebebereich, wobei das Mehrfache der Anzahl Ziegel Z entspricht, die in der Horizontalen eines einzelnen Solarmoduls M angeordnet werden können. In diesem Beispiel sind die vier Ziegel Z, somit ist der Schiebebereich, der von den Rippen ermöglicht wird, das Vierfache des Schiebebereichs zwischen den Ziegeln Z.

Der Schiebebereich der Ziegel Z liegt typischerweise bei ca. 2 mm. Die Rippen lassen somit einen deutlich höheren Schiebebereich zu. Auf diese Weise ist es möglich, die Ziegel Z, die in der Dacheindeckung einem Solarmodul M zugeordnet sind, entweder ganz zusammenzuschieben oder in ihrem maximalen Abstand zueinander anzuordnen. Zwischenpositionen sind auch möglich. Dies erhöht die Flexibilität in der Gestaltung der Dacheindeckung.

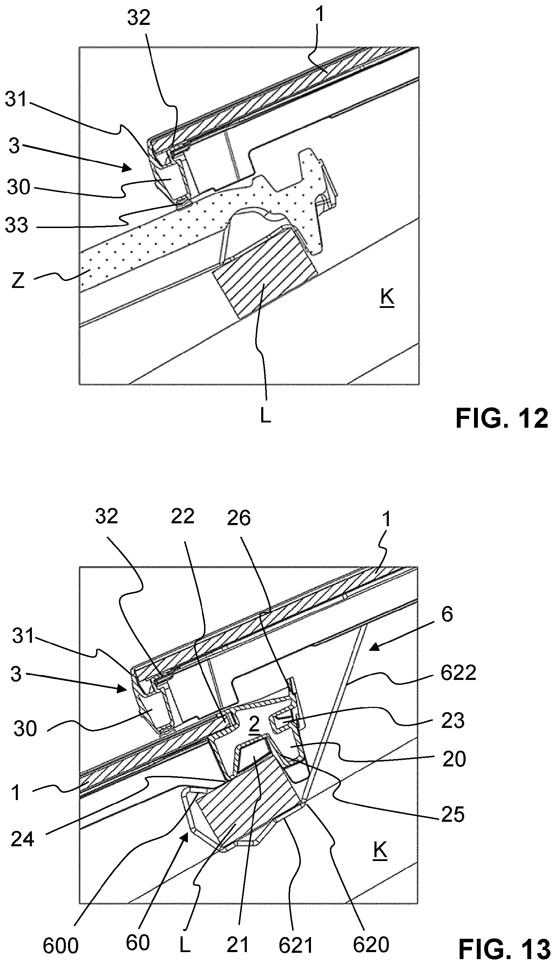

In den Figuren 12 bis 14 ist die Verbindung zwischen zwei Solarmodulen M bzw. zwischen einem Solarmodul M und einem Ziegel Z im Bereich der oberen und unteren Rahmenteile 2, 3 dargestellt.

In Figur 12 ist der Ziegel Z unten angeordnet und das Solarmodul M oben. Der Ziegel Z umgreift liegt mit einer Verfalzung die Dachlatte L und ist entsprechend an ihr aufgehängt. Das untere Rahmenteil 3 des Solarmoduls M liegt auf dem Ziegel auf.

Wie in Figur 12 erkennbar ist, ist das untere Rahmenteil 3 vorzugsweise als Hohlprofil ausgebildet. Es weist eine nach oben ragende vertikale Anschlagfläche 31 auf, an der das Solarpanel 1 ansteht. Es liegt zudem auf einer Auflagefläche 32 auf, die senkrecht zur Anschlagfläche 31 und somit horizontal verläuft. Der untere Bereich des unteren Rahmenteils 3 bildet den Kanal 30 aus. Am freien Ende des unteren Bereichs bzw. des Kanals 30 ist zweites Dichtungsprofil 33 vorhanden, das dichtend auf der obersten Oberfläche des Ziegels Z aufliegt. Das zweite Dichtungsprofil 33 ist als Dichtstreifen ausgebildet, der sich vorzugsweise über die gesamte Länge der Unterseite des unteren Rahmenteils 3 erstreckt. Das zweite Dichtungsprofil 33 ist vorzugsweise einteilig ausgebildet und in einer Nut des Rahmenteils 3 gehalten. Das zweite Dichtungsprofil 33 ist vorzugsweise ein Elastomer, vorzugsweise EPDM. Das zweite Dichtungsprofil 33 überbrückt Unebenheiten in der Oberfläche der Ziegel Z und dichtet die Schnittstelle bei Regen ab. Vorzugsweise ist auch hier eine Seitenfalzklammer 6 vorhanden. Sie ist jedoch zur besseren Lesbarkeit der Zeichnung nicht dargestellt.

In Figur 13 sind zwei Solarmodule M übereinander angeordnet. Das obere Solarmodul M liegt mit seinem unteren Rahmenteil 3 auf der Oberfläche des Solarpanels 1 des unteren Solarmoduls M dichtend auf. Das untere Solarmodul M ist mit seinem oberen Rahmenteil 2 an der Dachlatte L aufgehängt. Hierzu weist das obere Rahmenteil 2 eine identische oder zumindest ähnliche Form der Verfalzung auf wie der in Figur 12 dargestellte Ziegel Z.

Das obere Rahmenteil 2 ist vorzugsweise als Hohlprofil ausgebildet. Es weist den bereits erwähnten Kanal 20 auf, der oben durch eine Einbuchtung im Profil des oberen Rahmenteils 2 begrenzt ist. Die Einbuchtung ist als Nut ausgebildet, die einen Aufnahmenut 23 für die Kopfklammer 7 bildet. Bei der hier dargestellten Verbindung wird jedoch keine Kopfklammer 7 verwendet. Sie wird jedoch bei einer Verbindung zwischen unten liegendem Solarmodul M und oben liegenden Ziegel Z eingesetzt, wie dies in Figur 14 dargestellt ist.

Wie in Figur 13 gut erkennbar, ist der Kanal 20 seitlich durch eine weitere Einbuchtung 21 im Profil des oberen Rahmenteils 2 begrenzt. Diese Einbuchtung 21 bildet auf ihrer Innenseite eine Anschlagfläche 25 für einen Anschlag an die Oberseite der Dachlatte L aus. Auf der anderen Seite der Einbuchtung, die bei Montage in der Dacheindeckung unten liegt, ist eine Auflagekante 24 ausgebildet, die auf der Oberfläche der Dachlatte L aufliegt. Diese Oberfläche der Dachlatte L ist nach oben zum Solarpanel 1 hin gerichtet. Anschlagfläche 25 und Auflagekante 24 sind gleich oder ähnlich ausgebildet wie die entsprechende Rippe bzw. die entsprechende Nutwand des Ziegels Z.

Der obere Rahmenteil 2 bildet ferner dank einer vorstehenden Rippe eine Panel-Aufnahmenut 22 aus zur Aufnahme des Solarpanels 1. Ferner ist eine vorstehende Befestigungskante 26 vorhanden, die der Befestigung des ersten Dichtungsprofils 8 dient. Das Dichtungsprofil 8 wird jedoch nicht für diese Verbindung verwendet, sondern für eine Verbindung zwischen unten liegendem Solarmodul M und oben liegenden Ziegel Z, wie dies in Figur 14 dargestellt ist.

Wie ebenfalls in Figur 13 erkennbar ist, dient hier die Seitenfalzklammer 6 zur Sicherung des oberen Solarmoduls M und somit aufgrund des Aufliegens auf dem unteren Solarmodul M, auch des unteren Solarmoduls M.

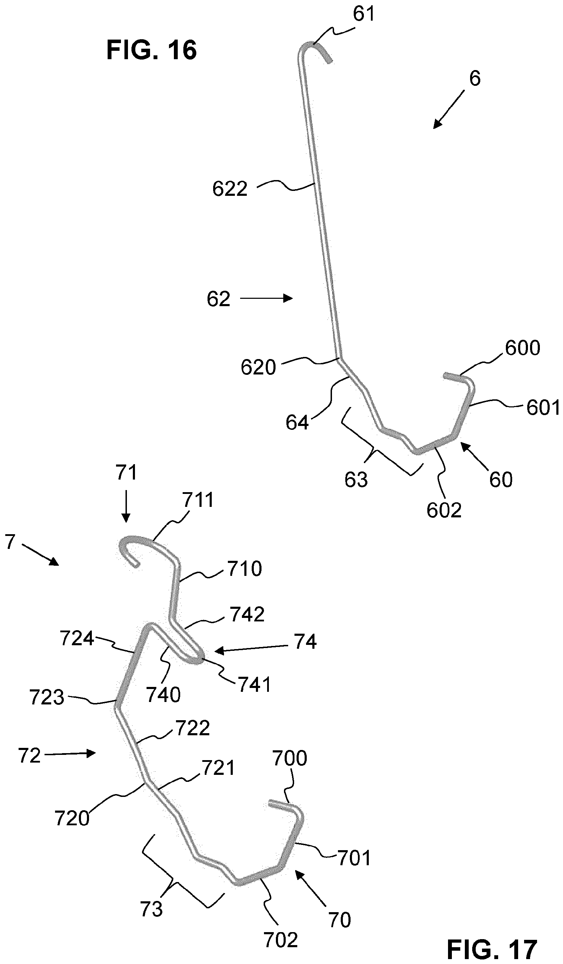

Die Seitenfalzklammer 6 ist in Figur 16 gut erkennbar. Sie weist vorzugsweise dieselbe Form auf wie die in EP 2 186 963 B1 beschriebene Seitenfalzklammer. Vorzugsweise ist die Drahtdicke jedoch leicht grösser als die Dicke der käuflich erhältlichen Seitenfalzklammern. Andere Formen von Seitenfalzklammern lassen sich ebenfalls verwenden.

Die Seitenfalzklammer 6 beginnt mit einem ersten Endteil 60, an das sich ein Übergangsbereich 63 anschliesst, gefolgt von einem Biegearm 62, und sie endet in einem zweiten Endteil 61.

Das erste Endteil 60 umgreift die Dachlatte L. Vorzugsweise weist das erste Endteil 60 einen freien Schenkel 600 auf, an dem in einem Winkel von vorzugsweise kleiner als 90° ein erster Basisschenkel 601 und ein dazu winklig angeordneter zweiter Basisschenkel 602 folgt. Anschliessend beginnt der Übergangsbereich 63, der annähernd rechtwinklig zum zweiten Basisschenkel 602 verläuft, wobei er einen nach aussen, von der Dachlatte L weg gerichteten Knick aufweist. Der nachfolgende Biegearm 62 weist vorzugsweise auch einen Knick 620 auf, der den Biegearm 62 in einen kurzen ersten Schenkel und einem langen zweiten Schenkel 622 unterteilt. Der Knick 620 ist in Figur 16 erkennbar. In Figur 13 ist er ausgeprägter, da sich der erste Schenkel 621 beim Einhängen des zweiten Endteils 61 in die Verzahnung 560 des rechten Rahmenteils 5 an die Dachlatte L anlegt und der zweite Schenkel 621 die Verspannung zwischen oberen Solarmodul M und Dachlatte L gewährleistet. Wie in Figur 13 erkennbar ist, steht der freie Schenkel 600 des ersten Endteils 60 auf der Oberfläche der Dachlatte L an und fixiert die Verspannung.

In Figur 14 ist die Verbindung zwischen einem oben liegenden Ziegel Z und einem unten liegenden Solarmodul M dargestellt. Der Ziegel Z liegt mit seinen nach unten ragenden Rippen seiner Verfalzung auf dem oberen Rahmenteil 2 des Solarmoduls M (genauer auf dem darüber angeordneten ersten Dichtungsprofil 8) und auf der Oberfläche des Solarpanels 1 auf. Die in Einbaulage unterste Rippe G des Ziegels Z ist hierzu geschrotet, d.h. sie wurde im Vergleich zu den entsprechenden Rippen der übrigen Ziegel Z gekürzt.

Auf dem oberen Rahmenteil 2 ist nun das erste Dichtungsprofil 8 befestigt, so dass es eine Dichtung zwischen der inneren Rippe des Ziegels Z und dem oberen Rahmenteil 2 des Solarmoduls M bildet.

Das erste Dichtungsprofil 8 ist in Figur 15 erkennbar. Es ist vorzugsweise einteilig ausgebildet und besteht vorzugsweise aus einem Elastomer, vorzugsweise aus EPDM (Ethylen-Propylen-Dien, M-Klasse). Es weist einen flächigen Lappen 80 auf, der vorzugsweise einen leichten Knick in Längsrichtung aufweist. Der Lappen 80 geht in einen Hohlkörper 81 über, an den ein Befestigungsbogen 82 und ein annähernd senkrecht zur Grundfläche des Lappens 80 angeordnetes freies Ende 83 anschliesst.

Wie in Figur 14 erkennbar ist, ist umschliesst der Bogen 82 die Befestigungskante 26 des oberen Rahmenteils 2. Der Hohlkörper 81 liegt ragt in eine untere Ausnehmung des Ziegels Z hinein und befindet sich zwischen der Oberfläche des oberen Rahmenteils 2 und dem Ziegel Z. Der Hohlkörper 81 wird je nach Position des Ziegels Z zusammengedrückt oder er steht frei im Raum. Im ersten Fall dichtet er, im zweiten Fall ist die Dichtung lediglich durch den Dichtungsfuss, hier Lappen 80 genannt, gewährleistet.

Die innere Rippe des Ziegels Z liegt auf dem Lappen 80 auf, wobei der Lappen 80 zwischen der inneren Rippe und der geschrotteten Rippe G des Ziegels Z endet. Dadurch dichtet der Lappen 80 nach unten und verhindert, dass bei Wind Regenwasser nach oben zwischen Ziegel Z und Solarmodul M auf die innere Dachfläche gelangt

Die zur Sicherung dienende Kopfklammer 7 ist in Figur 17 gut erkennbar. Sie beginnt mit einem ersten Endteil 70, an das sich ein Übergangsbereich 73 anschliesst, gefolgt von einem Biegearm 72 und einem Einschubteil 74 und sie endet in einem zweiten Endteil 71.

Das erste Endteil 70 und der Übergangsbereich 73 sind vorzugsweise gleich ausgebildet wie die entsprechenden Bereiche der Seitenfalzklammer 6. Das erste Endteil 70 weist einen freien Schenkel 700 auf, an dem in einem Winkel von vorzugsweise kleiner als 90° ein erster Basisschenkel 701 und ein dazu winklig angeordneter zweiter Basisschenkel 702 folgt. Der Übergangsbereich 73 verläuft annähernd rechtwinklig zum zweiten Basisschenkel 602, wobei er einen nach aussen, von der Dachlatte L weg gerichteten Knick aufweist.

Der nachfolgende Biegearm 72 weist wie die Seitenfalzklammer 6 einen kurzen ersten Schenkel 721 und einen Knick 720 auf. Anstelle des langen zweiten Schenkels sind jedoch ein zweiter Schenkel 722 und ein dritter Schenkel 724 vorhanden, die durch eine zweiten Knick 723 in einem Winkel zueinander verlaufen. Der zweite Knick 723 führt dazu, dass der dritte Schenkel 724 das daran anschliessende Einschubteil 74 zum ersten Endteil 70 hin gerichtet ist. Das Einschubteil 74 weist einen ersten Arm 740, einen dazu parallel verlaufenden und vorzugsweise gleich lang ausgebildeten zweiten Arm 742 und einen dazwischen liegenden Bogen 741 auf. Das am zweiten Arm 742 anschliessende zweite Endteil 71 weist einen vierten Schenkel 710 und einen in einem Winkel dazu angeordneten Haken 711 auf.

Wie in Figur 14 gut erkennbar ist, umgreifen das erste Endteil 71 und der Übergangsbereich 73 wiederum die Dachlatte L und der erste Schenkel 721 des Biegearms 72 liegt an der Dachlatte L an. Das Einschubteil 74 ist in die Klammer-Aufnahmenut 23 des oberen Rahmenteils 2 eingeschoben und verspannt so die Kopfklammer 7. Dadurch ist das Solarmodul M in der Dachabdeckung auch in seinem oberen Bereich gesichert.

Das zweite Endteil 71 hat keine Funktion für die Verspannung. Es dient jedoch als Handgriff zum Halten der Kopfklammer 7 vor der Montage und als Angriffspunkt, wenn eine eingespannte Kopfklammer 7 wieder entfernt werden muss. Vorzugsweise ist in diesem Bereich ebenfalls eine Seitenfalzklammer 6 vorhanden, die jedoch zur besseren Lesbarkeit der Zeichnung nicht dargestellt ist. Üblicherweise wird jedoch nicht jeder Ziegel Z mit einer Sturmklammer 6, 7 gesichert.

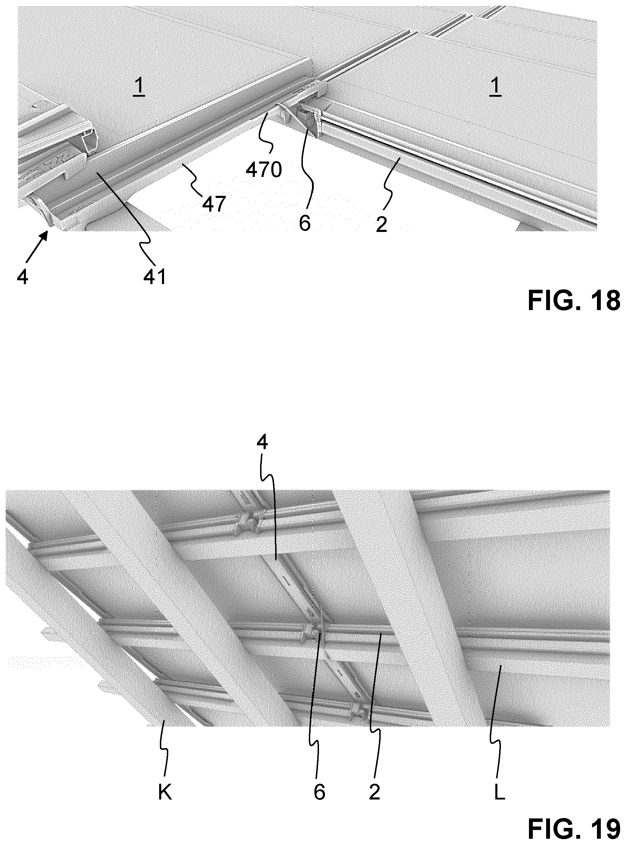

In den Figuren 18 und 19 sind Ausschnitte der Dacheindeckung dargestellt, die Beispiele von Anordnungen von Seitenfalzklammern 6 zeigen. In Figur 20 sind Beispiele für die Anordnung von Kopfklammern 7 gezeigt.

In Figur 21 ist erkennbar, wie die Muldeneinlagen MZ ausgebildet sind. Sie werden oben in die Verfalzung der Ziegel Z eingehängt und liegen in der Vertiefung bzw. Mulde derjenigen Oberfläche des Ziegels Z auf, die der Witterung ausgesetzt ist. Sie werden für diejenigen Ziegel Z verwendet, bei denen oberhalb Solarmodule M angeordnet sind, wie dies in Figur 1 erkennbar ist. In der Figur 21 sind die Muldeineinlagen MZ aus Ton, sie bilden somit Miniziegel. In anderen Ausführungsformen sind sie aus Metall, wobei sie dieselbe Form oder eine ähnliche Form aufweisen wie die hier dargestellten Ziegel, um die Dichtheit zu gewährleisten.

Die Erfindung ermöglicht eine einfache und schnelle Indach-Montage von Solarmodulen.

### BEZUGSZEICHENLISTE

- 1: Solarpanel

- 2: oberes Rahmenteil
- 20: Kanal
- 21: Einbuchtung
- 22: Panel-Aufnahmenut
- 23: Klammer-Aufnahmenut
- 24: Auflagekante
- 25: Anschlagfläche
- 26: Befestigungskante

- 3: unteres Rahmenteil
- 30: Kanal
- 31: Anschlagfläche
- 32: Auflagefläche
- 33: zweites Dichtungsprofil

- 4: linkes Rahmenteil
- 40: erster Schenkel
- 41: zweiter Schenkel
- 410: Flachdichtung
- 42: Eckstück
- 420: Einbuchtung
- 43: obere Rippe
- 44: untere Rippe
- 440: Plattform
- 441: erste Positionierungshilfe
- 442: zweite Positionierungshilfe
- 45: Aufnahmenut
- 46: erste Vertikalrippe
- 47: zweite Vertikalrippe
- 470: Verzahnung
- 48: oberer Abschluss
- 49: unterer Abschluss
- 5: rechtes Rahmenteil
- 50: erster Schenkel
- 500: Vertiefung
- 51: zweiter Schenkel
- 52: Eckstück
- 520: Einbuchtung
- 53: obere Rippe
- 54: Aufnahmenut
- 541: erste Positionierungshilfe
- 542: zweite Positionierungshilfe
- 55: erste Vertikalrippe
- 56: zweite Vertikalrippe
- 560: Verzahnung
- 58: oberer Abschluss
- 59: unterer Abschluss
- 590: Stützelement

- 6: Seitenfalzklammer
- 60: erstes Endteil
- 600: freier Schenkel
- 601: erster Basisschenkel
- 602: zweiter Basisschenkel
- 61: zweites Endteil
- 62: Biegearm
- 620: Knick
- 621: erster Schenkel
- 622: zweiter Schenkel
- 63: Übergangsbereich

- 7: Kopfklammer
- 70: zweites Endteil
- 700: freier Schenkel
- 701: erster Basisschenkel
- 702: zweiter Basisschenkel
- 71: zweites Endteil
- 710: vierter Schenkel
- 711: Haken
- 72: Biegearm
- 720: erster Knick
- 721: erster Schenkel
- 722: zweiter Schenkel
- 723: zweiter Knick
- 724: dritter Schenkel
- 73: Übergangsbereich
- 74: Einschubteil
- 740: erster Arm
- 741: Bogen
- 742: zweiter Arm

- 8: erstes Dichtungsprofil
- 80: Lappen
- 81: Hohlkörper
- 82: Befestigungsbogen
- 83: freies Ende

- 90: obere Verfalzung
- 91: seitliche Verfalzung

- G: Geschrotete unterste Rippe
- K: Konterlatte
- L: Dachlatte
- M: Photovoltaikmodul, Solarmodul
- MZ: Muldeneinlage
- T: Traufbrett
- Z: Ziegel

## Patentansprüche

1. Rahmen eines Photovoltaikmoduls (M) zur Indachmontage auf einem Gebäudedach, wobei der Rahmen eine Verbindungsstruktur aufweist, die ein Aufliegen auf einer Dachlatte (L) und wahlweise eine direkte Verbindung mit einem angrenzenden Ziegel (Z) oder mit einem angrenzenden Rahmen eines weiteren Photovoltaikmoduls (M) erlaubt,
**dadurch gekennzeichnet,**
**dass** der Rahmen eine Sicherungsstruktur (470, 560, 23) zum Einhängen oder Einschieben einer Sturmklammer (6, 7) aufweist, die zwecks Sicherung des Photovoltaikmoduls (M) an der genannten oder an einer weiteren Dachlatte (L) befestigbar ist.

2. Rahmen nach Anspruch 1, wobei die Sicherung des Photovoltaikmoduls (M) verschraubungsfrei ist.

3. Rahmen nach einem der Ansprüche oder 2, wobei die Verbindungsstruktur die Form einer Verfalzung eines Falzziegels aufweist.

4. Rahmen nach einem der Ansprüche 1 bis 3, wobei die Sicherungsstruktur (470, 560) Teil der Verbindungsstruktur ist.

5. Rahmen nach einem der Ansprüche 1 bis 4, wobei die Sicherungsstruktur eine Verzahnung (470, 560) und/oder eine Aufnahmenut (23) ist.

6. Rahmen nach einem der Ansprüche 4 oder 5, wobei die Sicherungsstruktur (470, 560, 23) an mindestens einem Seitenprofil (4, 5) und/oder an einem oberen Profil (2) des Rahmens angeordnet ist.

7. Rahmen nach einem der Ansprüche 1 bis 6, wobei der Rahmen aus Metall ist.

8. Rahmen nach einem der Ansprüche 1 bis 7, wobei der Rahmen aus Profilteilen (2, 3, 4,5) besteht, die miteinander verbunden sind, wobei sie vorzugsweise durch Crimpen miteinander verbunden sind.

9. Rahmen nach einem der Ansprüche 1 bis 8, wobei mindestens ein Teil des Rahmens aus mindestens einem Druckgussteil besteht.

10. Rahmen nach einem der Ansprüche 1 bis 9, wobei der Rahmen aus vier Bauteilen (2, 3, 4, 5) besteht, nämlich aus einem oberen Rahmenteil (2), einem unteren Rahmenteil (3), einem linken Rahmenteil (4) und einem rechten Rahmenteil (5) besteht, wobei die vier Bauteile (2, 3, 4, 5) werkseitig mit einem Solarpanel (1) zusammengefügt sind und gemeinsam mit dem Solarpanel (1) das Photovoltaikmodul (M) bilden.

11. Photovoltaikmodul mit einem Rahmen gemäss einem der Ansprüche 1 bis 10, wobei das Photovoltaikmodul (M) ferner ein Solarpanel (1) aufweist, das im Rahmen gehalten ist.

12. Photovoltaikanlage mit mehreren Photovoltaikmodulen gemäss Anspruch 11, wobei jedes Photovoltaikmodule (M) mit mindestens zwei Sturmklammern (6, 7) an Dachlatten (L) gesichert ist und wobei die Sturmklammern Seitenfalzklammern (6) und/oder Kopfklammern (7) sind.

13. Dacheindeckung mit Indach-montierten Photovoltaikmodulen (M), insbesondere mit Photovoltaikmodulen (M) gemäss Anspruch 11, wobei die Dacheindeckung ferner Falzziegel (Z) aufweist, und wobei ferner ein Übergang zwischen obenliegenden Photovoltaikmodulen (M) und unten liegenden Falzziegeln (Z) vorhanden ist, wobei der Übergang aus Muldeneinlagen (MZ) besteht, die in eine Verfalzung am oberen Ende der unten liegenden Falzziegel (Z) eingehängt sind und die derart geformt sind, dass sie Vertiefungen im oberen Bereich der nach aussen gerichteten Oberfläche der Falzziegel (Z) ausfüllen.

14. Kopfklammer (7) zur Lagesicherung einer Dacheindeckung, insbesondere eines Photovoltaikmoduls (M) gemäss Anspruch 11, wobei die Kopfklammer (7) ein erstes Endteil (70) zum Umgreifen einer Dachlatte (L), ein Einschubteil (74) zum Einschieben in eine Aufnahmenut (23) einer Sicherungsstruktur der Dacheindeckung und einen zwischen dem ersten Endteil (70) und dem Einschubteil (74) angeordneten biegsamen Biegearm (72) aufweist.

15. Verfahren zur Montage von Photovoltaikmodulen gemäss Anspruch 11, wobei Photovoltaikmodule (M) wie Falzziegel (Z) auf Dachlatten (L) aufgelegt und lediglich mittels Sturmklammern (6, 7) gesichert werden.
